# EUROPEAN PATENT SPECIFICATION

(11) **EP 4 220 549 B1**
(45) Date of publication and mention of the grant of the patent: **04.11.2026**
(21) Application number: 21872151.2
(22) Date of filing: 07.09.2021
(51) Int. Cl.: G06T 5/60, G06T 5/70, G06T 7/246, G06T 7/00, G06T 15/00, G06V 10/774, G06V 10/82, G06V 20/05

(54) **INFORMATION PROCESSING METHOD, PROGRAM, AND INFORMATION PROCESSING DEVICE**
INFORMATIONSVERARBEITUNGSVERFAHREN, PROGRAMM UND INFORMATIONSVERARBEITUNGSVORRICHTUNG
PROCÉDÉ DE TRAITEMENT D'INFORMATIONS, PROGRAMME ET DISPOSITIF DE TRAITEMENT D'INFORMATIONS

(30) Priority: 28.09.2020 JP 2020162573
(43) Date of publication of application: 02.08.2023
(73) Proprietor: SoftBank Corp., Tokyo 105-7529 (JP)
(72) Inventor: ISHIWAKA, Yuko, Tokyo 105-7529 (JP)
(74) Representative: SSM Sandmair
(86) International application number: PCT/JP2021/032773
(87) International publication number: WO 2022/065020

(56) References cited:
- WO-A1-2017/122258
- WO-A1-2020/105146
- JP-A- 2003 208 561
- JP-A- 2015 528 614
- AMLAN KAR ET AL: "Meta-Sim: Learning to Generate Synthetic Datasets", ARXIV, 25 April 2019 (2019-04-25), pages 4550 - 4559, XP055729383, DOI: 10.1109/ICCV.2019.00465
- DAIKI SATOI ET AL: "Unified motion planner for fishes with various swimming styles", ACM TRANSACTIONS ON GRAPHICS, ACM, NY, US, vol. 35, no. 4, 11 July 2016 (2016-07-11), pages 1 - 15, XP058275862, ISSN: 0730-0301, DOI: 10.1145/2897824.2925977
- ALLKEN VANEEDA ET AL: "Fish species identification using a convolutional neural network trained on synthetic data", vol. 76, no. 1, 17 October 2018 (2018-10-17), pages 342 - 349, XP093084227, ISSN: 1054-3139, Retrieved from the Internet <URL:http://academic.oup.com/icesjms/article-pdf/76/1/342/31238015/fsy147.pdf> DOI: 10.1093/icesjms/fsy147

## Description

### Field

The present invention relates to an information processing method, a program, and an information processing apparatus.

### Background

Deep learning has achieved great results in the field of computer vision and voice recognition. For example, in fish farms, there is a need to address automatic count of the number of fish, and it is expected that such a problem will be resolved with use of a method of the deep learning.

### Relevant prior art

### Patent Literature

Patent Literature 1: International Publication No. WO 2019/045091

### Non-patent literature:

AMLAN KAR ET AL: "Meta-Sim: Learning to Generate Synthetic Datasets",ARXIV, 25 April 2019 (2019-04-25), pages 4550-4559, XP055729383, DOI: 10.1109/ICCV.2019.00465;
DAIKI SATOI ET AL: "Unified motion planner for fishes with various swimming styles",ACM TRANSACTIONS ON GRAPHICS, ACM, NY, US, vol. 35, no. 4, 11 July 2016 (2016-07-11), pages 1-15, XP058275862, ISSN: 0730-0301, DOI: 10.1145/2897824.2925977; and
ALLKEN VANEEDA ET AL: "Fish species identification using a convolutional neural network trained on synthetic data",ICES JOURNAL OF MARINE SCIENCE, vol. 76, no. 1 17 October 2018 (2018-10-17), pages 342-349, XP093084227,ISSN: 1054-3139, DOI: 10.1093/icesjms/fsy147.

### Summary

### Technical Problem

Precision of analysis using deep learning is dependent on training data. However, it is not easy to generate accurate training data. Further, in a case where a school of fish is handled, a large number of individuals that are not viewable due to overlapping are present, so that it is difficult to estimate needed information with high accuracy only by deep learning.

To cope with this, an object of the present disclosure is to propose an information processing method, a program, and an information processing apparatus capable of easily generating training data with high accuracy. In addition, another object of the present disclosure is to propose an information processing method, a program, and an information processing apparatus capable of estimating information included in real data with high accuracy. Solution to Problem

According to an aspect of the present disclosure, an information processing method implemented by a computer is provided as recited in claim 1. According to the present disclosure, a program for causing the computer to execute the information processing method, and an information processing apparatus that execute the information processing method, are provided.

### Advantageous Effects of Invention

According to the present disclosure, it is possible to easily generate training data with high accuracy.

### Brief Description of Drawings

FIG. 1 is a diagram for explaining an overview of information processing.
FIG. 2 is a diagram illustrating a variation of an image element.
FIG. 3 is a diagram illustrating a variation of image elements.
FIG. 4 is a diagram illustrating a variation of image elements.
FIG. 5 is a diagram for explaining machine learning for removing noise that is caused by a reflected image.
FIG. 6 is a diagram for explaining the machine learning for removing noise that is caused by a shadow.
FIG. 7 is a diagram illustrating an example of a school model 23.
FIG. 8 is a simulation image of a school at the time of non-feeding.
FIG. 9 is a simulation image of a school at the time of feeding.
FIG. 10 is a captured image of a school at the time of non-feeding.
FIG. 11 is a captured image of a school at the time of feeding.
FIG. 12 is a diagram illustrating an example of an individual model.
FIG. 13 is a diagram illustrating individual movement simulation.
FIG. 14 is a diagram illustrating sturgeons that are farmed in a fish cage.
FIG. 15 is a diagram illustrating an example of an information processing apparatus.
FIG. 16 is a diagram illustrating an example of a process of estimating the number of individuals in a school.
FIG. 17 is a diagram illustrating an example of tracking of an individual.
FIG. 18 is a diagram illustrating an example of an individual identification method and an abnormal behavior detection method.
FIG. 19 is a flowchart illustrating an example of an information processing method.
FIG. 20 is a diagram illustrating an example of a hardware configuration of the information processing apparatus.

### Description of Embodiments

Embodiments of the present disclosure will be described in detail below based on the drawings. In each of the embodiments below, the same components are denoted by the same reference symbols, and repeated explanation will be omitted.

### 1. Overview of information processing

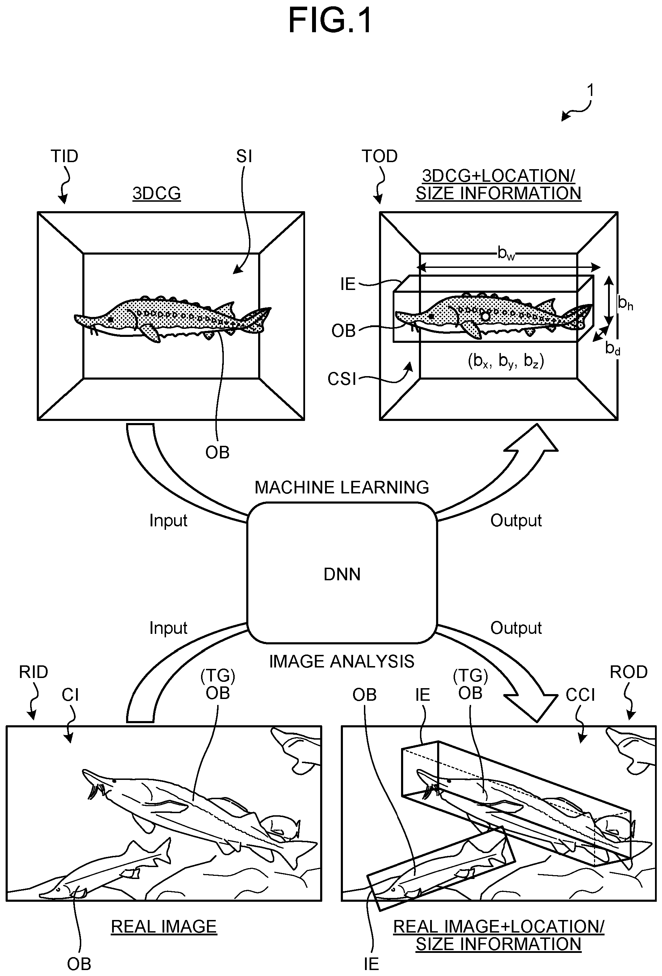

FIG. 1 is a diagram for explaining an overview of the information processing according to the present disclosure.

The present disclosure proposes a method of generating new training data using computer graphics (CG) and a data driven method for eliminating a difference between a CG image and real data (captured image). It is possible to generate a large amount of training data with high accuracy by generating the training data by CG images. Further, it is possible to estimate needed information with high accuracy based on CG parameters by generating CG images that closely resemble real data. Details of the present disclosure will be described below.

In the present disclosure, a target TG is analyzed by an image analysis method based on a captured image CI of the target TG. An information processing method of the present disclosure is applicable to a wide range of fields, such as the fishing industry, the agricultural industry, the forest industry, and the manufacturing industry. An analysis target is appropriately set in accordance with the technical field and a purpose of the analysis. For example, in the field of the fishing industry, the analysis target may be the number of farmed fish, growing conditions, a predatory behavior, an abnormal behavior, or the like. In the field of the agricultural industry, the analysis target may be growing conditions of agricultural crops, crop yields, or the like. In the field of the forest industry, the analysis target may be growing conditions of trees, timber yields, or the like. In the field of the manufacturing industry, the analysis target may be the number of products, presence or absence of defective products, or the like.

In the following, an example will be described in which the information processing method of the present disclosure is adopted to tracking of a farmed fish, detection of an abnormal behavior, counting of the number of fish, or the like.

### 2. Generation of training data

In the present disclosure, three-dimensional CG images of a school FLK and an individual OB are generated by using computer simulation. The generated CG images are used as training data for deep learning.

The training data includes a large number of data sets. Each of the data sets includes input data TID and ground truth data TOD. In the present disclosure, a simulation image SI that serves as the input data TID is generated by computer graphics. The ground truth data TOD is generated by adding label information to the input data TID. The label information is information indicating a correct answer (ground truth). The label information is automatically generated based on parameter information that is used for the simulation.

A target for the simulation is determined in accordance with a purpose of training. For example, when the number of farmed fish is to be counted, simulation of the school FLK is performed. When each farmed fish is individually tracked, simulation of the individual OB is performed.

The example in FIG. 1 is an example in which the simulation image SI of the individual OB is generated in order to track a farmed fish. The label information includes classification information for classifying the individual OB and location information on the individual OB. The classification information includes, for example, information on a type (fish species or the like) of the individual OB, a morphological feature (deformation of a fin, a defect, a body color, a pattern, or the like), or the like. The location information includes, for example, information indicating a center position of the individual OB and an existence range of the individual OB. The location information is generated by using, for example, three-dimensional coordinate information. In the example illustrated in FIG. 1, a coordinate (bₓ, b_{y}, b_{z}) of the center of the individual OB and information on a depth b_{d}, a width b_{w}, and a height bₕ of a cuboid (boundary cube) with a minimum size that contains the individual OB are illustrated as the location information. Information on a size of the individual OB is extracted based on the location information (information indicating the existence range) on the individual OB.

The ground truth data TOD may include an image element IE for identifying the individual OB. The image element IE may be a frame element that indicates a boundary cube, for example. The image element IE is automatically generated based on the location information on the individual OB that is used for the simulation. In the example illustrated in FIG. 1, the image element IE is indicated by the boundary cube, but the image element IE is not limited to this example. The image element IE may include, for example, a frame element that encloses the individual OB or a color element for identifying the individual OB by color.

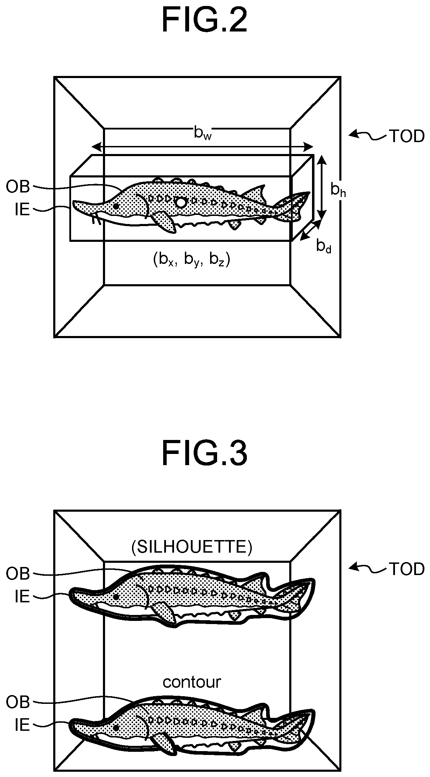

FIG. 2 to FIG. 4 are diagrams illustrating variations of the image element IE.

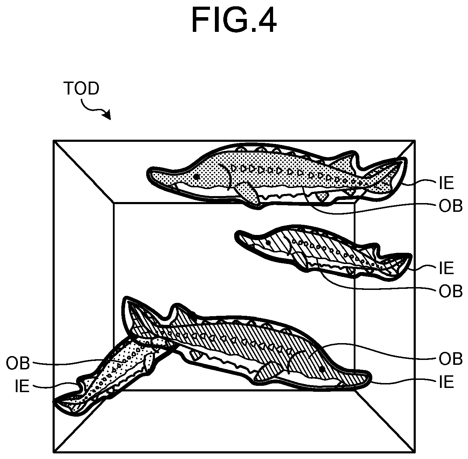

The example illustrated in FIG. 2 is an example in which the boundary cube illustrated in FIG. 1 is redisplayed. The example illustrated in FIG. 3 is an example in which the individual OB is replaced with a silhouette or an example in which a contour of the individual OB is bordered by a bold line. The example illustrated in FIG. 4 is an example in which the plurality of individuals OB are color coded. The boundary cube in FIG. 2 and the contour line in FIG. 3 correspond to the frame element that encloses the individual OB. The color coding in FIG. 4 corresponds to assignment of the color element. If the plurality of individuals OB are present, it may be possible to change a color of the frame element for each of the individuals OB or in accordance with the classification information on the individual OB.

### 3. Deep learning

Referring back to FIG. 1, in the present disclosure, machine learning (supervised learning) using the input data TID and the ground truth data TOD as training data is performed in a deep neural network (DNN). If input data RID is input to the trained DNN, output data ROD is generated by adding the label information and the image element IE to the input data RID.

For example, if the captured image CI is input to the DNN, the DNN extracts each of the individuals OB from the captured image CI. The DNN generates the classification information and the location information on each of the individuals OB based on a feature of each of the individuals OB. The DNN generates the label information that includes the classification information and the location information for each of the individuals OB. The DNN generates the image element IE for each of the individuals OB based on the location information on each of the individuals OB. The DNN generates a corrected image CCI by adding the image element IE of each of the individuals OB to the captured image CI. The DNN generates the output data ROD by adding the label information of each of the individuals OB to the corrected image CCI.

### 4. Noise removal

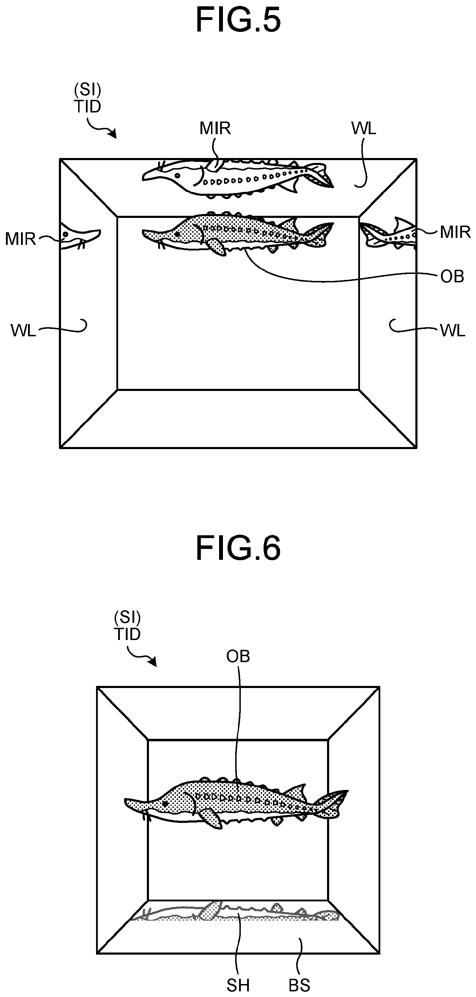

FIG. 5 and FIG. 6 are diagrams for explaining machine learning for removing noise.

To improve accuracy of image analysis performed by the DNN, it is possible to perform machine learning for removing noise that is included in the captured image CI. For example, if a camera is placed in a fish cage and performs image capturing, a reflected image MIR of the individual OB that moves near a water surface WS or a wall surface WL is projected on the water surface WS or the wall surface WL. At a bottom of the fish cage, a shadow SH of the individual OB is projected. The reflected image MIR and the shadow SH as described above are noise and may reduce accuracy of image analysis. Therefore, in the present disclosure, for example, the simulation image SI of the reflected image MIR and the shadow SH is generated, and training data is generated using the simulation image SI.

In the example illustrated in FIG. 5, the simulation image SI including the individual OB and the reflected images MIR is generated as the input data TID. The ground truth data TOD is the simulation image SI that is obtained by removing the reflected images MIR from the input data TID. If the input data TID and the ground truth data TOD are used as the training data, it is possible to obtain a DNN for removing the reflected images MIR from the captured image CI. In the example illustrated in FIG. 5, the input data TID and the ground truth data TOD include the individuals OB, but the individuals OB need not always be included in these pieces of the data. For example, it is possible to generate a DNN for removing the reflected images MIR even with use of training data that is obtained by deleting the individuals OB from the input data TID and the ground truth data TOD.

In the example in FIG. 6, the simulation image SI including the individual OB and the shadow SH is generated as the input data TID. The ground truth data TOD is the simulation image SI that is obtained by removing the shadow SH from the input data TID. If the input data TID and the ground truth data TOD are used as the training data, it is possible to obtain a DNN for removing the shadow SH from the captured image CI. In the example illustrated in FIG. 6, the input data TID and the ground truth data TOD include the individuals OB, but the individuals OB need not always be included in these pieces of data. For example, even with use of the training data that is obtained by removing the individuals OB from the input data TID and the ground truth data TOD as described above, it is possible to generate a DNN for removing the shadow SH.

### 5. Simulation models

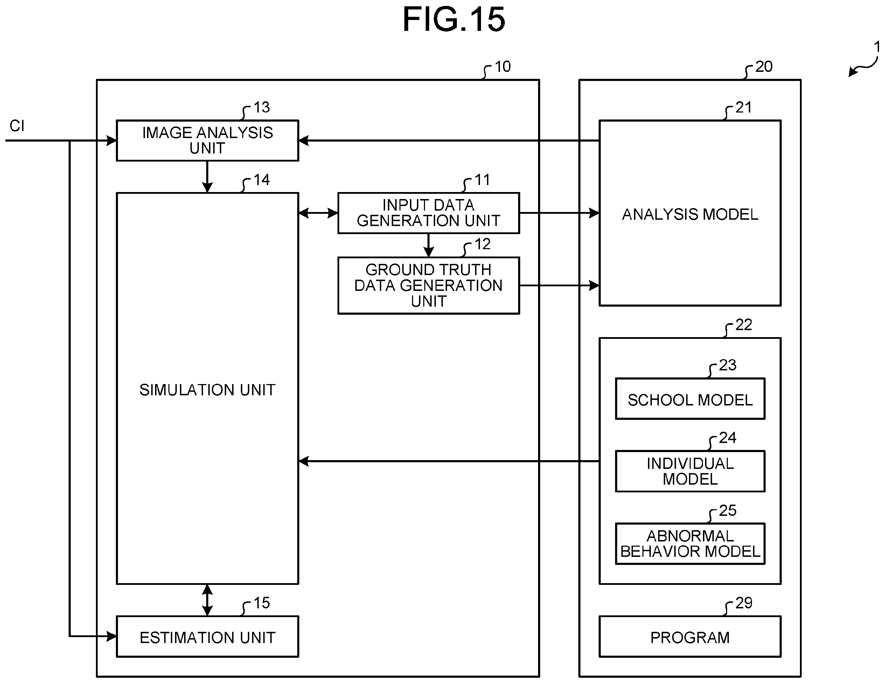

The simulation images SI of the school FLK and the individual OB may be generated by using a school model 23 (see FIG. 15) and an individual model 24 (see FIG. 15). The school model 23 is a simulation model that is based on a statistical property of the school FLK. The individual model 24 is a simulation model that is based on a morphological feature of the individual OB. An overview of the simulation models will be described below.

### 5-1. School model

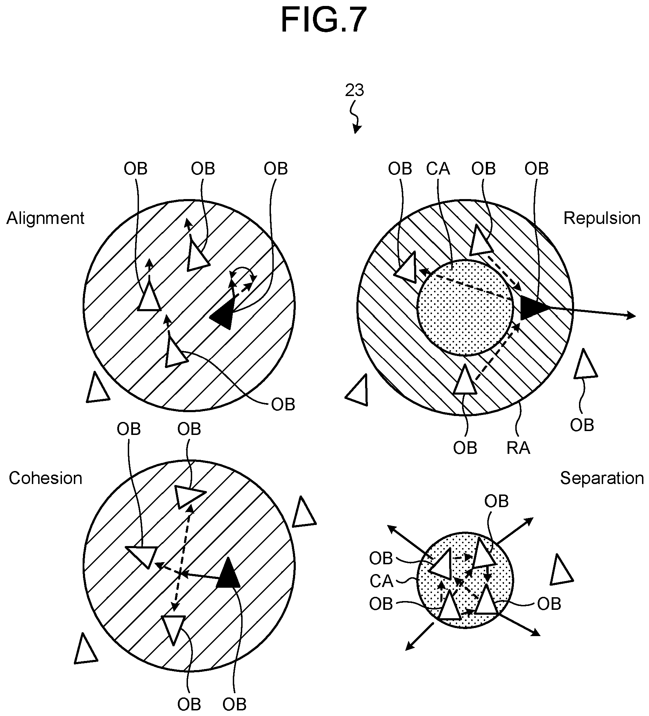

FIG. 7 is a diagram illustrating an example of the school model 23.

The school model 23 is generated by combining, for example, the Boids model in which three movement rules, such as separation, alignment, and cohesion, are defined, and a predator model that indicates a predatory behavior at the time of feeding. In the predator model, a repulsion area RA for encouraging movement in a direction opposite to a crowded direction is set outside a crowded area CA in which the movement rule for separation is applied. The predator model is generated by simulating the way the individual OB gets food that is visible to the individual OB (fish vision simulation). The predator model may be used to optimize food in accordance with a type of the individual OB and density in the cage.

In the school model 23, for example, a degree of alignment of the individuals OB, a degree of formation of a school, a viewing angle, a top speed, a food recognition speed, a degree of obsession with food, a duration of continuous eating (feed amount with which the individual is fully fed), a duration of eating at one time, a moving speed during eating, a size of the crowded area CA, a size of the repulsion area RA, and the like are set as parameters of the school FLK. These parameters are changed depending on the types or the sizes of the individuals OB.

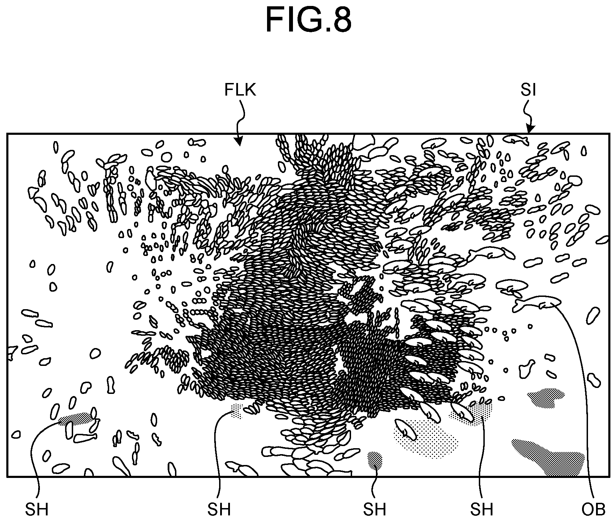

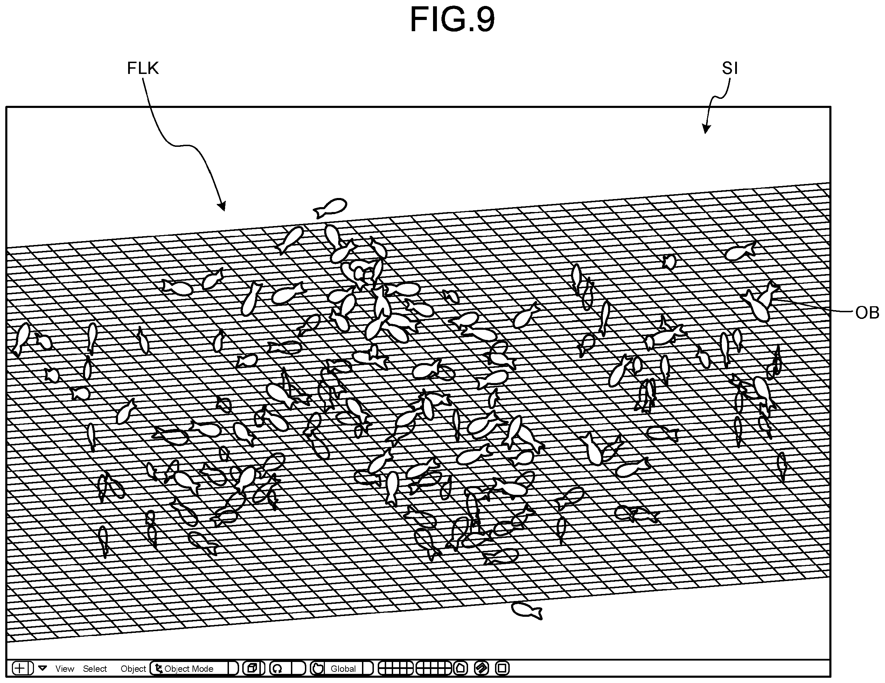

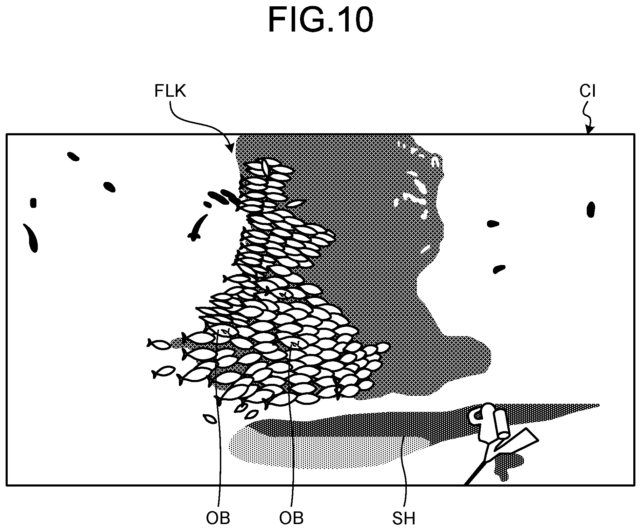

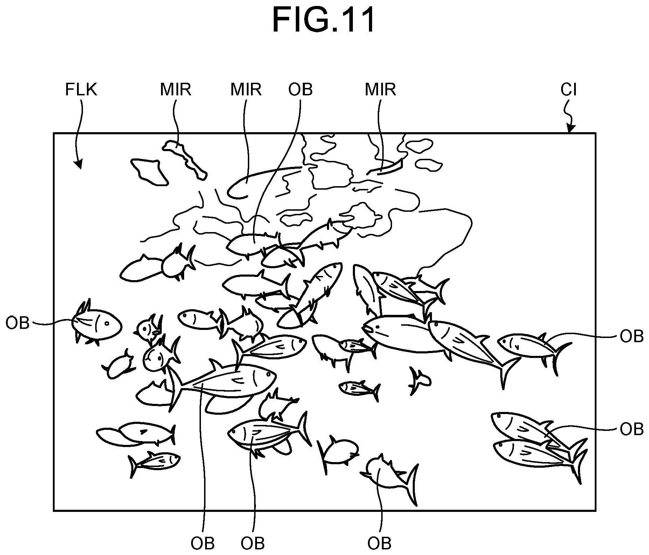

FIG. 8 illustrates the simulation image SI of the school FLK at the time of non-feeding. FIG. 9 is the simulation image SI of the school FLK at the time of feeding. FIG. 10 is the captured image CI of the school FLK at the time of non-feeding. FIG. 11 is the captured image CI of the school FLK at the time of feeding.

As illustrated in FIG. 8 and FIG. 10, at the time of non-feeding, the school FLK approximately moves in accordance with the three movement rules of separation, alignment, and cohesion. Therefore, a large number of the individuals OB are crowded in a narrow range. As illustrated in FIG. 9 and FIG. 11, at the time of feeding, the school FLK moves in accordance with four movement rules, such as separation, alignment, cohesion, and repulsion. Due to the movement rule of repulsion, the school FLK is spread out, so that density of the school FLK is reduced.

As illustrated in FIG. 10, in the crowded school FLK, a large number of the individuals OB that are not visible because of overlapping with each other are present, so that it is difficult to accurately count the number of the individuals. Therefore, the number of the individuals is estimated based on the simulation image SI as illustrated in FIG. 8. A shape and a size of the school FLK are changed by adjusting the parameters of the simulation. Therefore, by adjusting the parameter information until the simulation image SI closely resembles the real data, it is possible to estimate the number of the individuals with high accuracy.

As illustrated in FIG. 11, the density of the school FLK decreases at the time of feeding. Therefore, it may be possible to estimate the number of the individuals based on the image that is captured at the time of feeding. In this case, the number of the individuals OB that are not visible due to overlapping is reduced, so that it becomes easy to count the number of the individuals. Even at the time of comparison with the simulation image SI illustrated in FIG. 9, it is possible to perform the comparison because the school FLK is not crowded.

### 5-2. Individual model

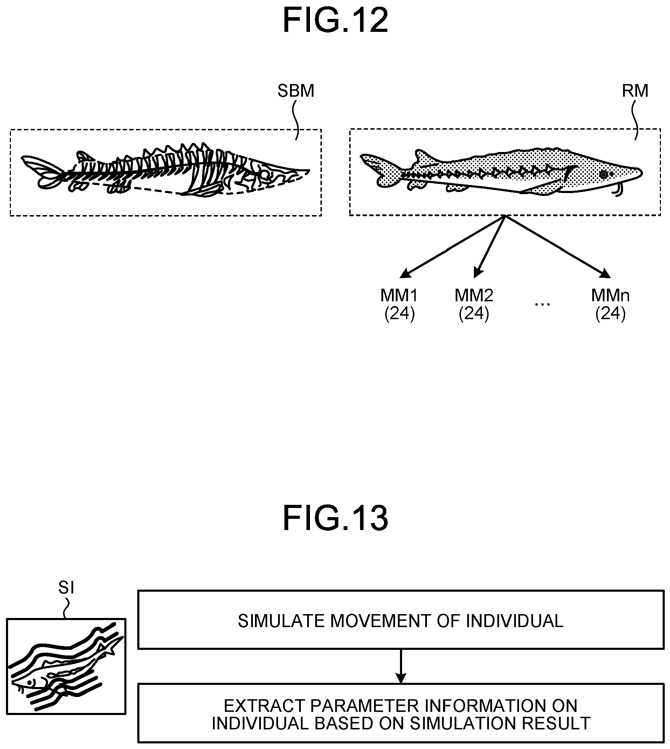

FIG. 12 is a diagram illustrating an example of the individual model 24.

The individual model 24 is generated based on a body structure of the individual OB. As the individual model 24, for example, a skeletal muscle model is used. A musculoskeletal SBM is obtained by dissecting the individual OB that has a standard shape and a standard size, and analyzing a skeleton of the individual OB and how muscles are attached to the skeleton. FIG. 12 illustrates the musculoskeletal SBM of a sturgeon. A reference model RM of the individual OB is reproduced from the musculoskeletal SBM. One or more mutation models MM1 to MMn (n is an integer equal to or larger than one) are generated in a derived manner from the reference model RM. Each of the reference model RM and the mutation models MM1 to MMn serves as the individual model 24. The individual model 24 is used as the classification information on the individual OB.

The mutation models are three-dimensional models of the individual OB that is morphologically abnormal. It is known that almost all of the individuals OB that were born in aquaculture have physical abnormalities (for example, a fin is bent, a shape of a fin is mutated, or a visceral disease occurs). Therefore, as the mutation models of the individual OB, for example, models related to abnormalities of a pectoral fin (for example, a pectoral fin is bent), abnormalities of a dorsal fin (for example, a dorsal fin is bent), abnormalities of a tail fin (for example, a tail fin is bent), and a contour mutation (for example, a contour of a head portion is mutated as compared to a normal individual) are generated. Meanwhile, the mutation models are not limited to those as described above. Types of the mutation models to be generated are individually determined in accordance with the type of the individual OB or an environment in which the individual OB exists.

FIG. 13 is a diagram illustrating a movement simulation of the individual OB.

The individual model 24 is associated with a movement feature value that is obtained by the movement simulation. In the example of the sturgeon, a feature value (movement feature value) of a swimming style is extracted by fluid simulation for each of the individual models 24. The swimming style of the individual OB varies depending on a morphological feature of the individual OB. For example, the individual OB with a physical abnormality swims so as to compensate for the abnormality. Therefore, the feature value of the swimming style is different for each of the individual models 24. The feature value of the swimming style may be used as parameter information for identifying the individual OB. The parameter information indicating the movement feature value of the individual OB is associated with the individual model 24 and used as the classification information.

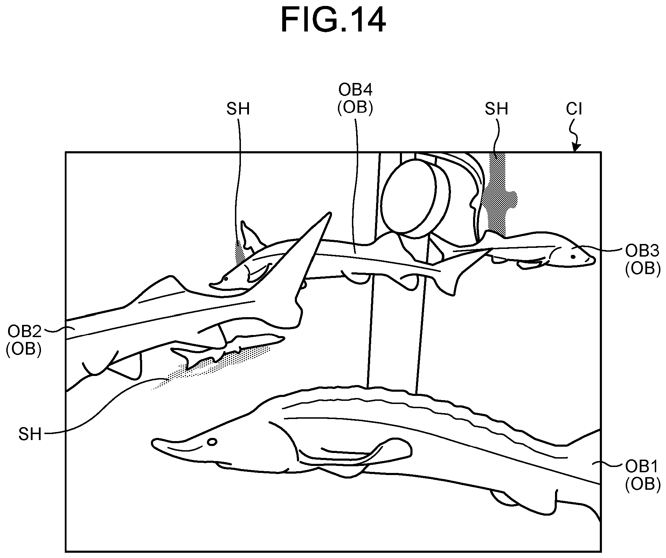

FIG. 14 is a diagram illustrating a sturgeon that is farmed in a fish cage.

Almost all of sturgeons in the farm have certain physical abnormalities. For example, among an individual OB1 to an individual OB4, shapes of pectoral fins, dorsal fins, and tail fins are not uniform, and contours are also slightly different from one another. Therefore, it is possible to assign a mutation model to each of the sturgeons in accordance with a physical abnormality. Even among the sturgeons to which the same mutation model is assigned, degrees of the physical abnormalities vary. Therefore, the parameter information that indicates the movement feature value of the individual OB varies for each of the sturgeons. Consequently, if the parameter information on each of the individuals OB is detected by the movement simulation, it is possible to identify each of the individuals OB based on the detected parameter information.

### 6. Configuration of information processing apparatus

FIG. 15 is a diagram illustrating an example of an information processing apparatus 1 to which the information processing according to the present disclosure is applied.

The information processing apparatus 1 is a dedicated or a general-purpose computer system, such as a server. The DNN for the image analysis as described above is included in an analysis model 21. The information processing apparatus 1 includes a processing device 10 and a storage device 20. The processing device 10 includes, for example, an input data generation unit 11, a ground truth data generation unit 12, an image analysis unit 13, a simulation unit 14, and an estimation unit 15.

The simulation unit 14 generates a three-dimensional simulation image SI by using a simulation model that is defined in model information 22. The simulation image SI is an image that is obtained by reproducing a simulation result as an image that is viewed at a certain camera angle by using a CG technology. In the model information 22, for example, the school model 23, the individual model 24, an abnormal behavior model 25, and the like are defined. The abnormal behavior model 25 is a simulation model that indicates an abnormal behavior of the individual OB. The simulation unit 14 generates the simulation images SI of the school FLK and the individual OB based on the simulation models.

The input data generation unit 11 generates parameter information that is needed for the simulation, and outputs the parameter information to the simulation unit 14. The input data generation unit 11 generates the simulation image SI that serves as the input data TID through computer graphics using the simulation unit 14.

The ground truth data generation unit 12 generates the label information based on the parameter information that is used for the simulation. The ground truth data generation unit 12 generates the ground truth data TOD that includes the simulation image SI and the label information. The ground truth data generation unit 12 is able to generate the image element IE for identifying the individual OB, on the basis of the location information on the individual OB that is used for the simulation. In this case, the ground truth data generation unit 12 generates the corrected image CSI by adding the image element IE to the simulation image SI, and generates the ground truth data TOD by adding the label information to the corrected image CSI.

The input data generation unit 11 and the ground truth data generation unit 12 generate a large number of pieces of training data. The analysis model 21 is generated based on machine learning in which the input data TID and the ground truth data TOD as described above are used as the training data. The analysis model 21 includes, for example, a DNN for analyzing the classification information and the location information on the individual OB, a DNN for analyzing the parameter information on the school FLK, a DNN for analyzing the parameter information on the individual OB, a DNN for removing the reflected image MIR, a DNN for removing the shadow SH, and the like. The DNNs as described above are appropriately trained in accordance with a requested function. Various methods are applicable to the machine learning, and a recurrent neural network (RNN), deep reinforcement learning and transformer, or the like may be used.

The image analysis unit 13 performs image analysis on the captured image CI by using the analysis model 21. The image analysis unit 13 extracts the label information from the captured image CI by the image analysis. The image analysis unit 13 extracts needed parameter information from the extracted label information.

The estimation unit 15 outputs the parameter information extracted by the image analysis unit 13 to the simulation unit 14. The estimation unit 15 generates the simulation image SI based on the extracted parameter information by using the simulation unit 14. The estimation unit 15 calculates a difference between the simulation image SI and the captured image CI. If the difference does not meet a condition that is set in advance, the estimation unit 15 corrects the parameter information and generates the simulation image SI. The estimation unit 15 repeats correction of the parameter information and generation of the simulation image SI until the difference meets the above-described condition. The estimation unit 15 estimates needed information based on the parameter information that has been corrected until the above-described condition is met.

The storage device 20 stores therein, for example, a program 29 that is executed by the processing device 10, the analysis model 21, and the model information 22. The program 29 is a program that causes a computer to execute the information processing of the present disclosure. The processing device 10 performs various kinds of processing in accordance with the program 29 that is stored in the storage device 20. The storage device 20 may be used as a work area for temporarily storing a processing result obtained by the processing device 10. The storage device 20 includes, for example, an arbitrary non-transitory storage medium, such as a semiconductor storage medium and a magnetic storage medium. The storage device 20 includes, for example, an optical disk, a magneto-optical disk, or a flash memory. The program 29 is stored in, for example, a computer-readable non-transitory storage medium.

The processing device 10 is, for example, a computer that includes a processor and a memory. The memory of the processing device 10 includes a random access memory (RAM) and a read only memory (ROM). The processing device 10 functions as the input data generation unit 11, the ground truth data generation unit 12, the image analysis unit 13, the simulation unit 14, and the estimation unit 15 by executing the program 29.

### 7. Process of estimating number of individuals

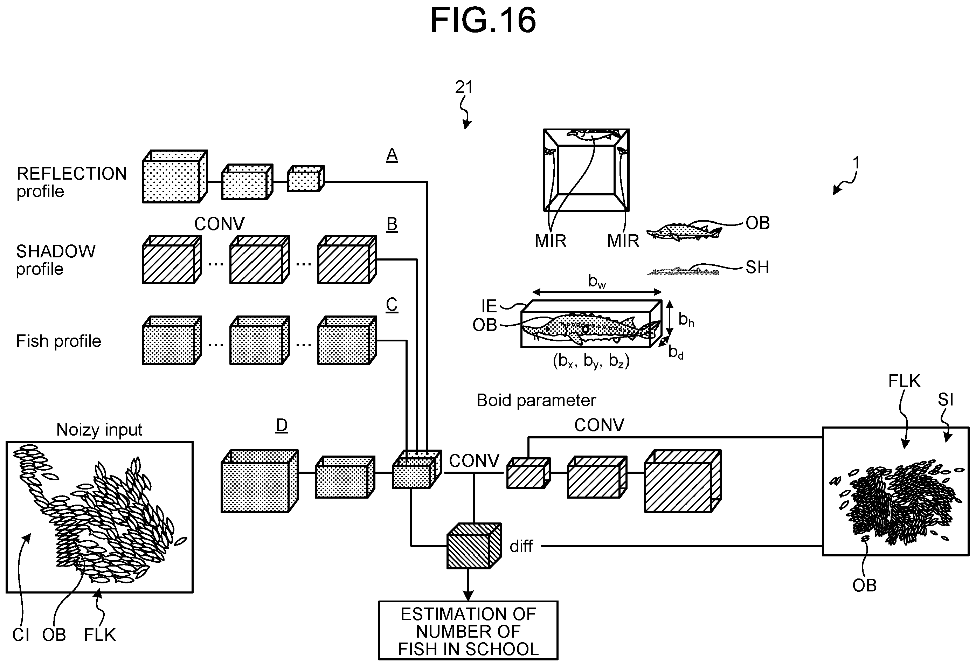

FIG. 16 is a diagram illustrating an example of a process of estimating the number of individuals in the school FLK.

The analysis model 21 includes a DNNA, a DNNB, a DNNC, and a DNND. The DNNA is a DNN for removing the reflected image MIR. The DNNB is a DNN for removing the shadow SH. The DNNC is a DNN for extracting the location information and the classification information on the individual OB. The DNND is a DNN for extracting the parameter information on the school FLK.

The simulation image SI for training the DNND is a simulation image of the school FLK that is generated by using the school model 23. The label information of training data for the DNND is generated based on the parameter information on the school FLK that is applied to the school model 23. If the captured image CI of the school FLK is input to the DNND, the parameter information on the school FLK is extracted. The DNNC extracts information on a type, a position, a size, and the like of each of the individuals OB from the captured image CI. The DNNA and the DNNB separates noise components (the reflected image MIR and the shadow SH) that are included in the captured image CI.

The image analysis unit 13 extracts the label information from the captured image CI of the school FLK by using the analysis model 21. The image analysis unit 13 extracts the parameter information on the school FLK on the basis of the extracted label information. The estimation unit 15 estimates the number of the individuals OB included in the school FLK on the basis of the parameter information on the school FLK.

At an estimation step as described above, first, the estimation unit 15 generates the simulation image SI of the school FLK on the basis of the parameter information on the school FLK and the information on the type, the position, and the size of the individual OB. The estimation unit 15 corrects the parameter information on the school FLK until a difference diff between the simulation image SI and the captured image CI of the school FLK meets a condition that is set in advance. The difference diff is calculated based on a difference between the feature value of the captured image CI and the feature value of the simulation image SI. The estimation unit 15 estimates the number of the individuals OB on the basis of the parameter information on the school FLK that has been corrected until the above-described condition is met.

The simulation image SI that is generated at the estimation step includes the reflected images MIR and the shadows SH of the individuals OB. The number of the reflected images MIR and density of the shadows SH may be a clue for obtaining the information on the school FLK at a position in a blind spot of the camera. Therefore, the difference diff also includes a difference between the reflected images MIR and the shadows SH that are included in the simulation image SI and the reflected images MIR and the shadows SH that are included in the captured image CI. By taking into account difference information on the reflected images MIR and the shadows SH, it is possible to estimate the number of the individuals with high accuracy.

In the example illustrated in FIG. 16, images at the time of non-feeding are used as the captured image CI and the simulation image SI. However, it may be possible to use images of the school FLK at the time of feeding as the captured image CI and the simulation image SI. At the time of feeding at which the predator model is adopted, the density of the school FLK is reduced as compared to the time of non-feeding at which the predator model is not adopted. Therefore, the number of the individuals OB that are not viewable due to overlapping is reduced. Consequently, it is possible to detect the difference between the simulation image SI and the captured image CI with high accuracy, so that the estimation accuracy of the number of individuals is improved.

Meanwhile, the DNNC detects the types and the sizes of the individuals OB. Therefore, the information processing apparatus 1 may include an input means for inputting a type and a size of targets to be counted. With this configuration, the user is able to count only the number of the individuals OB of a specific type or with a specific size.

### 8. Tracking of individual

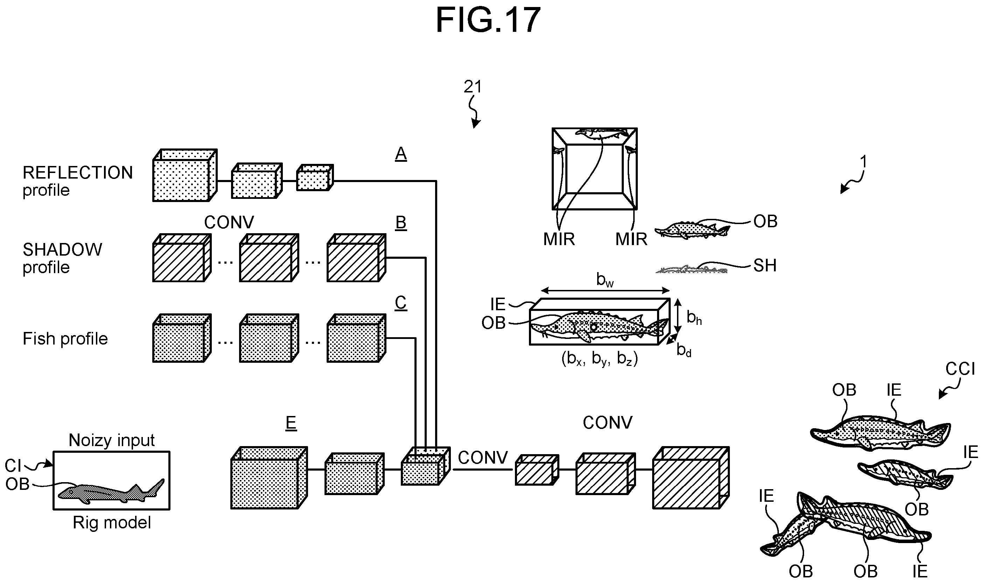

FIG. 17 is a diagram illustrating an example of tracking of an individual.

The analysis model 21 includes the DNNA, the DNNB, the DNNC, and a DNNE. The DNNE is a DNN for adding the image element IE to each of the individuals OB on the basis of the location information and the classification information on each of the individuals that are extracted by the DNNC.

The image analysis unit 13 applies the captured image CI to the analysis model 21 and adds the image element IE to each of the individuals OB that appears in the captured image CI. In the example illustrated in FIG. 17, a different color element is added, as the image element IE, to each of the individuals OB. The color of the individual OB varies depending on the size, the shape, or the like of the individual OB. The size of the individual OB is extracted from the location information on the individual OB. The shape of the individual OB is extracted from the classification information (morphological feature) on the individual OB. The image analysis unit 13 detects the plurality of individuals OB and individually tracks each of the individuals OB on the basis of the image elements IE that are added to the individuals OB.

### 9. Identification of individual and recognition of abnormal behavior

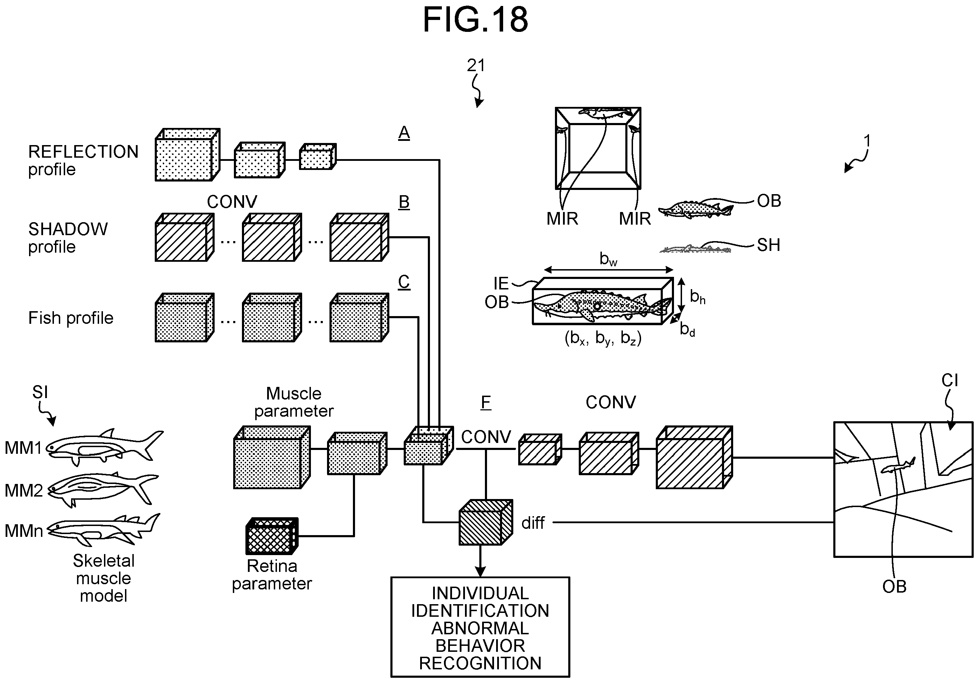

FIG. 18 is a diagram illustrating an example of a method of identifying an individual and a method of detecting an abnormal behavior.

The analysis model 21 includes the DNNA, the DNNB, the DNNC, and a DNNF. The DNNF is a DNN for extracting the parameter information on the individual OB.

The simulation image SI for training the DNNF is a simulation image of the individual that is generated by using the individual model 24. The label information on the training data of the DNNF is generated based on the parameter information on the individual OB that is applied to the individual model 24. If the captured image CI of the individual OB is input to the DNNF, the parameter information corresponding to the morphological feature (the individual model 24) of the individual OB is extracted.

The image analysis unit 13 extracts the label information on each of the individuals OB from the captured image CI by using the analysis model 21. The image analysis unit 13 extracts the parameter information on the individual OB on the basis of the label information on the individual OB, for each of the individuals OB. The extracted parameter information on the individual OB includes parameter information on a muscle parameter that is applied to the skeletal muscle model of the individual OB and parameter information indicating the movement feature value of the individual OB that is associated with the individual model 24, for example. The estimation unit 15 identifies each of the individuals OB on the basis of the parameter information on each of the individuals OB.

At the identification step as described above, first, the estimation unit 15 generates the simulation image SI of the individual OB on the basis of the parameter information on the individual OB. The estimation unit 15 corrects the parameter information on the individual OB until the difference between the simulation image and the captured image CI of the individual OB meets a condition that is set in advance. The difference diff is calculated based on a difference between the feature value of the captured image CI and the feature value of the simulation image SI. The estimation unit 15 identifies the individual OB on the basis of the parameter information on the individual OB that has been corrected until the above-described condition is met.

It is possible to recognize an abnormal behavior by a simulation using a retina parameter of the individual OB. The retina parameter is, for example, a parameter indicating a relationship between an event issuance direction viewed from the individual OB and a moving direction of the individual OB. For example, if a food falls in front of the individual OB and the individual OB moves in a direction different from the direction in which the food is present, it is possible to estimate that the individual OB has abnormality. Furthermore, a sturgeon with a visceral disease may perform an abnormal behavior, such as unnatural drift near a water surface. In this case, it is possible to apply the captured image CI to the abnormal behavior model 25 to extract the retina parameter, and detect abnormality of the individual OB by comparing the retina parameter with a reference value that is set in advance.

Detection of abnormal behaviors is useful for detection of poor physical condition due to overfeeding. Therefore, it is possible to adjust or optimize a feed amount based on a detection result of the abnormal behaviors.

### 10. Information processing method

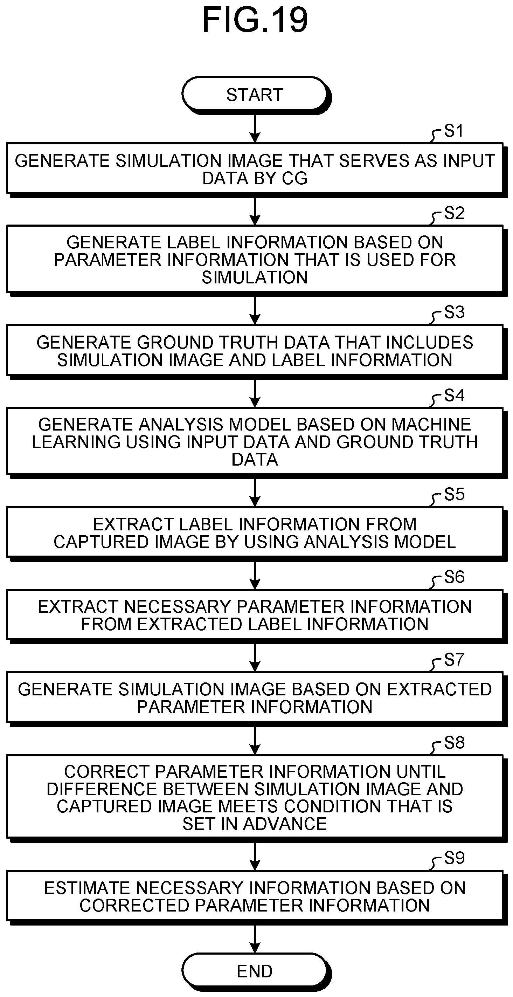

FIG. 19 is a flowchart illustrating an example of the information processing method according to the present disclosure.

At Step S1, the input data generation unit 11 generates the simulation image SI that serves as the input data TID by CG.

At Step S2, the ground truth data generation unit 12 generates the label information based on the parameter information that is used for the simulation.

At Step S3, the ground truth data generation unit 12 generates the ground truth data TOD that includes the simulation image SI and the label information.

At Step S4, the processing device 10 generates the analysis model 21 based on the machine learning in which the input data TID and the ground truth data TOD are used as the training data.

At Step S5, the image analysis unit 13 extracts the label information from the captured image CI by using the analysis model 21.

At Step S6, the image analysis unit 13 extracts needed parameter information from the extracted label information.

At Step S7, the parameter information that is extracted by the image analysis unit 13 is output to the simulation unit 14. The estimation unit 15 generates the simulation image SI based on the extracted parameter information by using the simulation unit 14.

At Step S8, the estimation unit 15 calculates a difference between the simulation image SI and the captured image CI, and generates the simulation image SI while correcting the parameter information if the difference does not meet a condition that is set in advance. The estimation unit 15 repeats correction of the parameter information and generation of the simulation image SI until the difference meets the above-described condition.

At Step S9, the estimation unit 15 estimates needed information on the basis of the parameter information that has been corrected until the above-described condition is met.

### 11. Hardware configuration

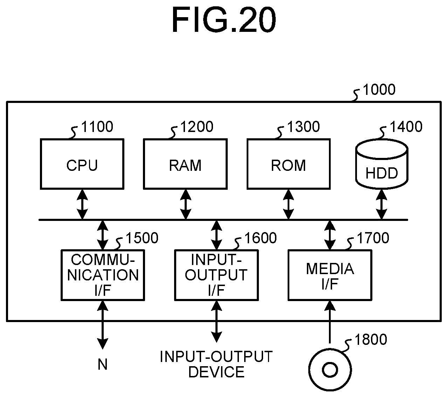

FIG. 20 is a diagram illustrating an example of a hardware configuration of the information processing apparatus 1.

The information processing apparatus 1 is implemented by, for example, a computer system 1000 as illustrated in FIG. 20. The computer system 1000 includes a central processing unit (CPU) 1100, a RAM 1200, a ROM 1300, an HDD 1400, a communication interface (I/F) 1500, an input-output interface (I/F) 1600, and a medium interface (I/F) 1700.

The CPU 1100 operates based on a program that is stored in the ROM 1300 or the HDD 1400, and controls each of the units. The ROM 1300 stores therein a boot program that is executed by the CPU 1100 at the time of activation of the computer system 1000, a program that is dependent on the hardware of the computer system 1000, and the like.

The HDD 1400 stores therein a program that is executed by the CPU 1100, data that is used by the program, and the like. The communication interface 1500 receives data from a different device via the communication network NW, sends the received data to the CPU 1100, and transmits data generated by the CPU 1100 to a different device via the communication network NW.

The CPU 1100 controls an output device, such as a display or a printer, and an input device, such as a keyboard or a mouse, via the input-output interface 1600. The CPU 1100 acquires data from the input device via the input-output interface 1600. Further, the CPU 1100 outputs the generated data to the output device via the input-output interface 1600.

The medium interface 1700 reads a program or data that is stored in a recording medium 1800, and provides the program or the data to the CPU 1100 via the RAM 1200. The CPU 1100 loads the program onto the RAM 1200 from the recording medium 1800 via the medium interface 1700, and executes the loaded program. The recording medium 1800 is, for example, an optical recording medium, such as a digital versatile disc (DVD) or a phase change rewritable disk (PD), a magneto-optical recording medium, such as a magneto-optical disk (MO), a tape medium, a magnetic recording medium, a semiconductor memory, or the like.

For example, when the computer system 1000 functions as the information processing apparatus 1 of the present disclosure, the CPU 1100 of the computer system 1000 executes the program that is loaded on the RAM 1200, and implements the functions of the processing device 10. The HDD 1400 stores therein data in the storage device 20. The CPU 1100 of the computer system 1000 reads the programs from the recording medium 1800 and executes the programs; however, as another example, it may be possible to acquire the programs from a different device via the communication network NW.

### 12. Effects

As described above, the information processing method according to the present disclosure includes an input data generation step, and a ground truth data generation step. The input data generation step is for generating the simulation image SI that serves as the input data TID by computer graphics. The ground truth data generation step is for generating the label information based on the parameter information that is used for a simulation, and generating the ground truth data TOD that includes the simulation image and the label information. The program 29 according to the present disclosure causes a computer to execute the information processing as described above. The information processing apparatus 1 according to the present disclosures implements the information processing as described above.

With this configuration, the label information on the ground truth data TOD is generated based on the parameter information that is used for the simulation. Therefore, it is possible to improve accuracy of the label information. Consequently, it is possible to easily generate training data with high accuracy.

The information processing method according to the present disclosure includes an analysis model generation step. The analysis model generation step is for generating the analysis model 21 based on the machine learning in which the input data TID and the ground truth data TOD are used as training data.

With this configuration, the coordinate information on the CG that is used for generating the input data TID is reflected in the label information. Therefore, with the analysis model 21 that is obtained by training, it is possible to extract the position, the shape, and the size of the individual OB and the parameter information on the school FLK that appear in the captured image CI with high accuracy.

The information processing method according to the present disclosure includes a label information extraction step, a parameter information extraction step, a simulation image generation step, a parameter information correction step, and an estimation step. The label information extraction step is for extracting the label information from the captured image CI by using the analysis model 21. The parameter information extraction step is for extracting the parameter information based on the label information. The simulation image generation step is for generating the simulation image SI based on the parameter information. The parameter information correction step is for correcting the parameter information until a difference between the simulation image and the captured image CI meets a condition that is set in advance. The estimation step is for estimating information based on the parameter information that has been corrected until the above-described condition is met.

With this configuration, the parameter information that is extracted by using the analysis model 21 is corrected based on the information on the difference between the simulation image SI and the captured image CI. Therefore, it is possible to obtain the parameter information that matches the real data (the captured image CI) in a preferable manner. Furthermore, the needed information is estimated based on the corrected parameter information, so that it is possible to improve information estimation accuracy.

The simulation image SI is a simulation image of the school FLK that is generated by using the school model 23 that is based on the statistical property of the school FLK. The label information is generated based on the parameter information on the school FLK that is applied to the school model 23.

With this configuration, the parameter information on the school FLK is extracted from the captured image CI of the school FLK with high accuracy.

The information processing method according to the present disclosure includes a label information extraction step, a parameter information extraction step, and an estimation step. The label information extraction step is for extracting the label information from the captured image CI of the school FLK by using the analysis model 21. The parameter information extraction step is for extracting the parameter information on the school FLK based on the extracted label information. The estimation step is for estimating the number of the individuals OB included in the school FLK, based on the parameter information on the school FLK.

With this configuration, it is possible to estimate the number of individuals in the school FLK with high accuracy.

The estimation step includes a simulation image generation step, a parameter information correction step, an individual number estimation step. The simulation image generation step is for generating the simulation image SI of the school FLK based on the parameter information on the school FLK. The parameter information correction step is for correcting the parameter information on the school FLK until a difference between the simulation image SI of the school FLK and the captured image CI meets a condition that is set in advance. The individual number estimation step is for estimating the number of the individuals OB based on the parameter information on the school FLK that has been corrected until the above-described condition is met.

With this configuration, the parameter information that is extracted by using the analysis model 21 is corrected based on information on the difference between the simulation image SI and the captured image CI. Therefore, it is possible to obtain the parameter information that matches the real data (the captured image CI) in a preferable manner. Furthermore, the number of the individuals is estimated based on the corrected parameter information, so that it is possible to estimate the number of the individuals with high accuracy.

The simulation image SI of the school FLK is a simulation image of the school FLK at the time of feeding.

With this configuration, at the time of feeding at which the predator model is adopted, the density of the school FLK is reduced as compared to the time of non-feeding at which the predator model is not adopted. Therefore, the number of the individuals OB that are not viewable due to overlapping is reduced. Consequently, it is possible to detect the difference between the simulation image SI and the captured image CI with high accuracy, so that the estimation accuracy of the number of individuals is improved.

The simulation image SI is a simulation image of the individual OB that is generated by using the individual model 24 that is based on the morphological feature of the individual OB. The label information is generated based on the parameter information on the individual OB that is applied to the individual model 24.

With this configuration, the parameter information on the individual OB is extracted from the captured image CI of the individual OB with high accuracy.

The information processing method according to the present disclosure includes a label information extraction step, a parameter information extraction step, and an individual identification step. The label information extraction step is for extracting the label information on each of the individuals OB from the captured image CI by using the analysis model 21. The parameter information extraction step is for extracting the parameter information on the individual OB based on the label information on the individual OB, for each of the individuals OB. The individual identification step is for identifying each of the individuals OB based on the parameter information on each of the individuals OB.

With this configuration, it is possible to identify the individual OB with high accuracy.

The identification step includes a simulation image generation step, a parameter information correction step, and an individual identification step. The simulation image generation step is for generating the simulation image SI of the individual OB based on the parameter information on the individual OB. The parameter information correction step is for correcting the parameter information on the individual OB until a difference between the simulation image SI and the captured image CI of the individual OB meets a condition that is set in advance. The individual identification step is for identifying the individual OB based on the parameter information on the individual OB that has been corrected until the above-described condition is met.

With this configuration, the parameter information that is extracted by using the analysis model 21 is corrected based on the information on the difference between the simulation image SI and the captured image CI. Therefore, it is possible to obtain the parameter information that matches the real data (the captured image CI) in a preferable manner. Further, the individual OB is identified based on the corrected parameter information, so that identification accuracy of the individual OB is improved.

The parameter information on the individual OB includes parameter information on a muscle parameter that is applied to a skeletal muscle model of the individual OB, and parameter information indicating a movement feature value of the individual OB.

With this configuration, it is possible to identify the individual OB based on both of the morphological feature and a feature of the movement of the individual OB with high accuracy.

The information processing method according to the present disclosure includes an abnormality detection step. The abnormality detection step is for detecting an abnormality of the individual OB by applying the captured image CI of the individual OB to the abnormal behavior model 25.

With this configuration, it is possible to recognize a health condition of the identified individual OB.

The ground truth data generation step includes an image element generation step, a corrected image generation step, and a data generation step. The image element generation step is for generating the image element IE for identifying the individual OB based on the location information on the individual OB that is used for the simulation. The corrected image generation step is for generating the corrected image CSI by adding the image element IE to the simulation image SI. The data generation step is for generating the ground truth data TOD by adding the label information to the corrected image CSI.

With this configuration, the image element IE is added to an appropriate position in the simulation image SI with high accuracy. Furthermore, operation of adding the image element IE is automated, so that it becomes easy to perform operation of generating the ground truth data TOD.

The image element includes a frame element for enclosing the individual OB or a color element for identifying the individual OB by color.

With this configuration, the individual OB is clearly distinguished from a different image area.

The information processing method according to the present disclosure includes an image element adding step and a tracking step. The image element adding step is for adding the image element IE to each of the individuals OB that appear in the captured image CI by applying the captured image CI to the analysis model 21. The tracking step is for individually tracking each of the individuals OB based on the image element IE that is added to each of the individuals OB.

With this configuration, it becomes easy to perform tracking by using the image element IE as a clue.

### 13. Others

The components of the apparatuses illustrated in the drawings are conceptual function, and need not be physically configured in the manner illustrated in the drawings. In other words, specific forms of distribution and integration of the apparatuses are not limited to those illustrated in the drawings, and all or part of the apparatuses may be functionally or physically distributed or integrated in arbitrary units depending on various loads or use conditions

Thus, some embodiments of the present application have been described in detail based on the drawings, but the embodiments are mere examples, and the present invention may be embodied with various changes or modifications based on knowledge of a person skilled in the art, in addition to the modes that are described in the section of the disclosure of the present invention.

In the embodiments as described above, the method of generating the training data using the CG has been described, and the method contributes to improvement in a recognition rate of any kind of computer vision, in addition to the example as described above. A method of precise musculoskeletal simulation using CG may be applied to a human being, a horse, or the like, in addition to a sturgeon. With this configuration, the method as described above may be widely applied to various fields using artificial intelligence (AI).

### Reference Signs List

- 1: information processing apparatus
- 21: analysis model
- 23: school model
- 24: individual model
- 25: abnormal behavior model
- 29: program
- CI: captured image
- CSI: corrected image
- FLK: school
- IE: image element
- OB: individual
- SI: simulation image
- TID: input data
- TOD: ground truth data

## Claims

1. An information processing method implemented by a computer, the information processing method comprising:
generating a simulation image (SI) that serves as input data (TID) by computer graphics;
generating label information indicating ground truth for the simulation image (SI), based on parameter information that is used for a simulation of the simulation image (SI);
generating ground truth data (TOD) that includes the simulation image (SI) and the label information;
generating an analysis model (21) based on machine learning in which the input data (TID) and the ground truth data (TOD) are used as training data, wherein the analysis model (21) takes a captured image (CI) as input and data with label information for the captured image (CI) added to the captured image (CI) as output;
extracting the label information for the captured image (CI), from the captured image (CI) by using the analysis model (21);
**characterized by**:
extracting parameter information, based on the label information extracted from the captured image (CI);
generating a new simulation image (SI), based on the parameter information extracted based on the label information;
correcting the parameter information extracted based on the label information until a difference between the new simulation image (SI) and the captured image (CI) meets a condition that is set in advance; and
estimating information based on the parameter information that has been corrected until the condition is met.

2. The information processing method according to claim 1, wherein
the simulation image (SI) is a simulation image of a school (FLK) including a large number of individuals that is generated by using a school model (23) that is based on a statistical property of the school (FLK), and
the label information is generated based on parameter information on the school (FLK) that is applied to the school model (23).

3. The information processing method according to claim 2,
wherein the captured image (CI) from which the label information is extracted is a captured image (CI) of the school (FLK);
the parameter information extracted based on the label information is parameter information on the school (FLK),
the method further comprising:
estimating number of individuals that are included in the school (FLK) based on the parameter information on the school (FLK).

4. The information processing method according to claim 3, wherein the simulation image (SI) of the school (FLK) is a simulation image of the school (FLK) at a time of feeding.

5. The information processing method according to claim 1, wherein
the simulation image (SI) is a simulation image of the individual that is generated by using an individual model (24) that is based on a morphological feature of the individual, and
the label information is generated based on parameter information on the individual that is applied to the individual model (24).

6. The information processing method according to claim 5,
wherein the label information extracted from the captured image (CI) is label information on each of individuals;
the process of extracting parameter information is carried out as a process of extracting parameter information on an individual based on the label information on the individual, for each of the individuals,
the method further comprising:
identifying each of the individuals based on the parameter information on each of the individuals.

7. The information processing method according to claim 6, wherein the parameter information on the individual includes parameter information on a muscle parameter that is applied to a skeletal muscle model of the individual and parameter information indicating a movement feature value of the individual.

8. The information processing method according to claim 6 or 7, further comprising:
detecting an abnormality of the individual by applying the captured image (CI) of the individual to an abnormal behavior model (25).

9. The information processing method according to any one of claims 5 to 8, wherein the generating the ground truth data (TOD) includes
generating an image element (IE) for identifying the individual based on location information on the individual that is used for the simulation,
generating a corrected image by adding the image element (IE) to the simulation image (SI), and
generating the ground truth data (TOD) by adding the label information to the corrected image.

10. The information processing method according to claim 9, wherein the image element (IE) includes one of a frame element for enclosing the individual and a color element for identifying the individual by color.

11. The information processing method according to claim 9 or 10, further comprising:
adding the image element (IE) to each of the individuals that appear in the captured image (CI) by applying the captured image (CI) to the analysis model (21); and
individually tracing each of the individuals based on the image element (IE) that is added to each of the individuals.

12. A program that causes a computer to execute:
generating a simulation image (SI) that serves as input data (TID) by computer graphics;
generating label information indicating ground truth for the simulation image (SI), based on parameter information that is used for a simulation of the simulation image (SI);
generating ground truth data (TOD) that includes the simulation image (SI) and the label information;
generating an analysis model (21) based on machine learning in which the input data (TID) and the ground truth data (TOD) are used as training data, wherein the analysis model (21) takes a captured image (CI) as input and data with label information for the captured image (CI) added to the captured image (CI) as output;
extracting the label information for the captured image (CI), from the captured image (CI) by using the analysis model (21);
**characterized by**:
extracting parameter information, based on the label information extracted from the captured image (CI);
generating a new simulation image (SI), based on the parameter information extracted based on the label information;
correcting the parameter information extracted based on the label information until a difference between the new simulation image (SI) and the captured image (CI) meets a condition that is set in advance; and
estimating information based on the parameter information that has been corrected until the condition is met.

13. An information processing apparatus comprising:
an input data generation unit (11) that generates a simulation image (SI) that serves as input data (TID) by computer graphics;
a ground truth data generation unit (12) that generates label information indicating ground truth for the simulation image (SI), based on parameter information that is used for a simulation of the simulation image (SI), and generates ground truth data (TOD) that includes the simulation image (SI) and the label information;
an image analysis unit (13) that extracts label information for a captured image (CI), from the captured image (CI) by using an analysis model (21), and extracts parameter information, based on the label information extracted from the captured image (CI), wherein the analysis model (21) is generated based on machine learning in which the input data (TID) and the ground truth data (TOD) are used as training data, and the analysis model (21) takes the captured image (CI) as input and data with label information for the captured image (CI) added to the captured image (CI) as output; and
**characterized by**:
an estimation unit (15) that generates a new simulation image (SI), based on the parameter information extracted based on the label information, corrects the parameter information extracted based on the label information until a difference between the new simulation image (SI) and the captured image (CI) meets a condition that is set in advance, and estimates information based on the parameter information that has been corrected until the condition is met.

## Patentansprüche

1. Durch einen Computer implementiertes Informationsverarbeitungsverfahren, wobei das Informationsverarbeitungsverfahren umfasst:
das Erzeugen eines Simulationsbildes (SI), das als Eingabedaten (TID) dient, mittels Computergrafik;
das Erzeugen von Labelinformationen, die Ground Truth für das Simulationsbild (SI) angeben, basierend auf Parameterinformationen, die für eine Simulation des Simulationsbildes (SI) verwendet wurden;
das Erzeugen von Ground-Truth-Daten (TOD), die das Simulationsbild (SI) und die Labelinformationen umfassen;
das Erzeugen eines Analysemodells (21) basierend auf maschinellem Lernen, bei dem die Eingabedaten (TID) und die Ground-Truth-Daten (TOD) als Trainingsdaten verwendet werden, wobei das Analysemodell (21) ein aufgenommenes Bild (CI) als Eingabe nimmt und Daten, bei denen Labelinformationen für das aufgenommene Bild (CI) zu dem aufgenommenen Bild (CI) hinzugefügt sind, als Ausgabe ausgibt;
das Extrahieren der Labelinformationen für das aufgenommene Bild (CI) aus dem aufgenommenen Bild (CI) unter Verwendung des Analysemodells (21); **gekennzeichnet durch**
das Extrahieren von Parameterinformationen basierend auf den aus dem aufgenommenen Bild (CI) extrahierten Labelinformationen;
das Erzeugen eines neuen Simulationsbildes (SI) basierend auf den Parameterinformationen, die basierend auf den Labelinformationen extrahiert wurden;
das Korrigieren der basierend auf den Labelinformationen extrahierten Parameterinformationen, bis eine Differenz zwischen dem neuen Simulationsbild (SI) und dem aufgenommenen Bild (CI) eine im Voraus festgelegte Bedingung erfüllt; und
das Schätzen von Informationen basierend auf den Parameterinformationen, die korrigiert wurden, bis die Bedingung erfüllt ist.

2. Das Informationsverarbeitungsverfahren nach Anspruch 1, wobei
das Simulationsbild (SI) ein Simulationsbild eines Schwarms (FLK) ist, der eine große Anzahl von Individuen umfasst und unter Verwendung eines Schwarmmodells (23) erzeugt wird, das auf einer statistischen Eigenschaft des Schwarms (FLK) basiert, und
die Labelinformationen basierend auf Parameterinformationen des Schwarms (FLK) erzeugt werden, die auf das Schwarmmodell (23) angewendet werden.

3. Das Informationsverarbeitungsverfahren nach Anspruch 2,
wobei das aufgenommene Bild (CI), aus dem die Labelinformationen extrahiert werden, ein aufgenommenes Bild (CI) des Schwarms (FLK) ist;
die basierend auf den Labelinformationen extrahierten Parameterinformationen Parameterinformationen des Schwarms (FLK) sind,
wobei das Verfahren ferner umfasst:
das Schätzen einer Anzahl von Individuen, die in dem Schwarm (FLK) enthalten sind, basierend auf den Parameterinformationen des Schwarms (FLK).

4. Das Informationsverarbeitungsverfahren nach Anspruch 3, wobei das Simulationsbild (SI) des Schwarms (FLK) ein Simulationsbild des Schwarms (FLK) zu einem Zeitpunkt der Fütterung ist.

5. Das Informationsverarbeitungsverfahren nach Anspruch 1, wobei
das Simulationsbild (SI) ein Simulationsbild des Individuums ist, das unter Verwendung eines Individuenmodells (24) erzeugt wird, das auf einem morphologischen Merkmal des Individuums basiert, und
die Labelinformationen basierend auf Parameterinformationen über das Individuum erzeugt werden, die auf das Individuenmodell (24) angewendet werden.

6. Das Informationsverarbeitungsverfahren nach Anspruch 5,
wobei die aus dem aufgenommenen Bild (CI) extrahierten Labelinformationen über jedes der Individuen sind;
der Prozess des Extrahierens von Parameterinformationen als ein Prozess des Extrahierens von Parameterinformationen über ein Individuum basierend auf den Labelinformationen über das Individuum für jedes der Individuen durchgeführt wird,
wobei das Verfahren ferner umfasst:
das Identifizieren jedes der Individuen basierend auf den Parameterinformationen über jedes der Individuen.

7. Das Informationsverarbeitungsverfahren nach Anspruch 6, wobei die Parameterinformationen über das Individuum Parameterinformationen über einen Muskelparameter, der auf ein Skelettmuskelmodell des Individuums angewendet wird, und Parameterinformationen, die einen Bewegungsmerkmalswert des Individuums angeben, umfassen.

8. Das Informationsverarbeitungsverfahren nach Anspruch 6 oder 7, ferner umfassend:
das Detektieren einer Abnormalität des Individuums durch Anwenden des aufgenommenen Bildes (CI) des Individuums auf ein Modell für abnormales Verhalten (25).

9. Das Informationsverarbeitungsverfahren nach einem der Ansprüche 5 bis 8, wobei
das Erzeugen der Ground-Truth-Daten (TOD) umfasst:
das Erzeugen eines Bildelements (IE) zum Identifizieren des Individuums basierend auf Standortinformationen über das Individuum, die für die Simulation verwendet wurden,
das Erzeugen eines korrigierten Bildes durch Hinzufügen des Bildelements (IE) zu dem Simulationsbild (SI), und
das Erzeugen der Ground-Truth-Daten (TOD) durch Hinzufügen der Labelinformationen zu dem korrigierten Bild.

10. Das Informationsverarbeitungsverfahren nach Anspruch 9, wobei das Bildelement (IE) eines von einem Rahmenelement zum Umschließen des Individuums und einem Farbelement zum Identifizieren des Individuums durch Farbe umfasst.

11. Das Informationsverarbeitungsverfahren nach Anspruch 9 oder 10, ferner umfassend:
das Hinzufügen des Bildelements (IE) zu jedem der Individuen, die in dem aufgenommenen Bild (CI) erscheinen, durch Anwenden des aufgenommenen Bildes (CI) auf das Analysemodell (21); und
das individuelle Verfolgen jedes der Individuen basierend auf dem Bildelement (IE), das zu jedem der Individuen hinzugefügt ist.

12. Ein Programm, das einen Computer veranlasst, Folgendes auszuführen:
das Erzeugen eines Simulationsbildes (SI), das als Eingabedaten (TID) dient, mittels Computergrafik;
das Erzeugen von Labelinformationen, die Ground Truth für das Simulationsbild (SI) angeben, basierend auf Parameterinformationen, die für eine Simulation des Simulationsbildes (SI) verwendet wurden;
das Erzeugen von Ground-Truth-Daten (TOD), die das Simulationsbild (SI) und die Labelinformationen umfassen;
das Erzeugen eines Analysemodells (21) basierend auf maschinellem Lernen, bei dem die Eingabedaten (TID) und die Ground-Truth-Daten (TOD) als Trainingsdaten verwendet werden, wobei das Analysemodell (21) ein aufgenommenes Bild (CI) als Eingabe nimmt und Daten, bei denen dem aufgenommenen Bild (CI) Labelinformationen für das aufgenommene Bild (CI) hinzugefügt sind, als Ausgabe ausgibt;
das Extrahieren der Labelinformationen für das aufgenommene Bild (CI) aus dem aufgenommenen Bild (CI) unter Verwendung des Analysemodells (21); **gekennzeichnet durch**:
das Extrahieren von Parameterinformationen basierend auf den aus dem aufgenommenen Bild (CI) extrahierten Labelinformationen;
das Erzeugen eines neuen Simulationsbildes (SI) basierend auf den Parameterinformationen, die basierend auf den Labelinformationen extrahiert wurden;
das Korrigieren der basierend auf den Labelinformationen extrahierten Parameterinformationen, bis eine Differenz zwischen dem neuen Simulationsbild (SI) und dem aufgenommenen Bild (CI) eine im Voraus festgelegte Bedingung erfüllt; und
das Schätzen von Informationen basierend auf den Parameterinformationen, die korrigiert wurden, bis die Bedingung erfüllt ist.

13. Eine Informationsverarbeitungsvorrichtung, umfassend:
eine Eingabedatenerzeugungseinheit (11), die ein Simulationsbild (SI), das als Eingabedaten (TID) dient, mittels Computergrafik erzeugt;
eine Ground-Truth-Datenerzeugungseinheit (12), die Labelinformationen, die Ground Truth für das Simulationsbild (SI) angeben, basierend auf Parameterinformationen erzeugt, die für eine Simulation des Simulationsbildes (SI) verwendet wurden, und Ground-Truth-Daten (TOD) erzeugt, die das Simulationsbild (SI) und die Labelinformationen umfassen;
eine Bildanalyseeinheit (13), die Labelinformationen für ein aufgenommenes Bild (CI) aus dem aufgenommenen Bild (CI) unter Verwendung eines Analysemodells (21) extrahiert und Parameterinformationen basierend auf den aus dem aufgenommenen Bild (CI) extrahierten Labelinformationen extrahiert, wobei das Analysemodell (21) basierend auf maschinellem Lernen erzeugt wird, bei dem die Eingabedaten (TID) und die Ground-Truth-Daten (TOD) als Trainingsdaten verwendet werden, und wobei das Analysemodell (21) das aufgenommene Bild (CI) als Eingabe nimmt und Daten, bei denen dem aufgenommenen Bild (CI) Labelinformationen für das aufgenommene Bild (CI) hinzugefügt sind, als Ausgabe ausgibt; und **gekennzeichnet durch**:
eine Schätzeinheit (15), die ein neues Simulationsbild (SI) basierend auf den Parameterinformationen erzeugt, die basierend auf den Labelinformationen extrahiert wurden, die basierend auf den Labelinformationen extrahierten Parameterinformationen korrigiert, bis eine Differenz zwischen dem neuen Simulationsbild (SI) und dem aufgenommenen Bild (CI) eine im Voraus festgelegte Bedingung erfüllt, und Informationen basierend auf den Parameterinformationen schätzt, die korrigiert wurden, bis die Bedingung erfüllt ist.

## Revendications

1. Procédé de traitement d'informations mis en œuvre par un ordinateur, le procédé de traitement d'informations comprenant :
la génération d'une image de simulation (SI) qui sert de données d'entrée (TID), par infographie ;
la génération d'informations d'étiquette indiquant une vérité-terrain pour l'image de simulation (SI), sur la base d'informations de paramètre qui sont utilisées pour une simulation de l'image de simulation (SI) ;
la génération de données de vérité-terrain (TOD) qui incluent l'image de simulation (SI) et les informations d'étiquette ;
la génération d'un modèle d'analyse (21), sur la base d'apprentissage machine dans lequel les données d'entrée (TID) et les données de vérité-terrain (TOD) sont utilisées en tant que données d'entraînement, dans lequel le modèle d'analyse (21) prend en entrée une image capturée (CI) et en sortie (des données avec des informations d'étiquette pour l'image capturée (CI) ajoutées à l'image capturée (CI) ;
l'extraction des informations d'étiquette pour l'image capturée (CI), depuis l'image capturée (CI), en utilisant le modèle d'analyse (21) ;
**caractérisé par** :
l'extraction d'informations de paramètre, sur la base des informations d'étiquette extraites depuis l'image capturée (CI) ;
la génération d'une nouvelle image de simulation (SI), sur la base des informations de paramètre extraites, sur la base des informations d'étiquette ;
la correction des informations de paramètre extraites, sur la base des informations d'étiquette, jusqu'à ce qu'une différence entre la nouvelle image de simulation (SI) et l'image capturée (CI) respecte une condition qui est définie d'avance, et
l'estimation d'informations, sur la base des informations de paramètre qui ont été corrigées, jusqu'à ce que la condition soit respectée.

2. Procédé de traitement d'informations selon la revendication 1, dans lequel
l'image de simulation (SI) est une image de simulation d'un banc (FLK) incluant un grand nombre d'individus, qui est générée en utilisant un modèle de banc (23) qui est basé sur une propriété statistique du banc (FLK), et
les informations d'étiquette sont générées sur la base d'informations de paramètre sur l'établissement scolaire (FLK) qui sont appliquées au modèle de banc (23).

3. Procédé de traitement d'informations selon la revendication 2,
dans lequel l'image capturée (CI), depuis laquelle sont extraites les informations d'étiquette, est une image capturée (CI) du banc (FLK) ;
les informations de paramètre extraites, sur la base des informations d'étiquette, sont des informations de paramètre sur le banc (FLK),
le procédé comprenant en outre :
l'estimation du nombre d'individus compris dans le banc (FLK) sur la base des informations de paramètre sur le banc (FLK).

4. Procédé de traitement d'informations selon la revendication 3, dans lequel l'image de simulation (SI) du banc (FLK) est une image de simulation du banc (FLK) au moment de l'alimentation.

5. Procédé de traitement d'informations selon la revendication 1, dans lequel
l'image de simulation (SI) est une image de simulation de l'individu qui est générée en utilisant un modèle d'individu (24) qui est basé sur une caractéristique morphologique de l'individu, et
les informations d'étiquette sont générées sur la base d'informations de paramètre sur l'individu qui sont appliquées au modèle d'individu (24).

6. Procédé de traitement d'informations selon la revendication 5,
dans lequel les informations d'étiquette extraites depuis l'image capturée (CI) sont des informations d'étiquette sur chacun des individus ;
le processus d'extraction des informations de paramètre est effectué sous la forme d'un processus d'extraction d'informations de paramètre sur un individu basé sur les informations d'étiquette sur l'individu, pour chacun des individus,
le procédé comprenant en outre :
l'identification de chacun des individus sur la base des informations de paramètre sur chacun des individus.

7. Procédé de traitement d'informations selon la revendication 6, dans lequel les informations de paramètre sur l'individu incluent des informations de paramètre sur un paramètre musculaire qui est appliqué à un modèle de muscle squelettique de l'individu et des informations de paramètre indiquant une valeur de caractéristique de mouvement de l'individu.

8. Procédé de traitement d'informations selon la revendication 6 ou 7, comprenant en outre :
la détection d'une anomalie de l'individu en appliquant l'image capturée (CI) de l'individu à un modèle de comportement anormal (25).

9. Procédé de traitement d'informations selon l'une quelconque des revendications 5 à 8, dans lequel
la génération de données de vérité-terrain (TOD) inclut
la génération d'un élément d'image (IE) pour identifier l'individu sur la base d'informations de localisation sur l'individu qui est utilisé pour la simulation,
la génération d'une image corrigée en ajoutant l'élément d'image (IE) à l'image de simulation (SI), et
la génération de données de réalité-terrain (TOD) en ajoutant les informations d'étiquette à l'image corrigée.

10. Procédé de traitement d'informations selon la revendication 9, dans lequel l'élément d'image (IE) inclut un composant parmi un élément de cadre pour encadrer l'individu et un élément de couleur pour identifier l'individu par couleur.

11. Procédé de traitement d'informations selon la revendication 9 ou 10, comprenant en outre :
l'ajout de l'élément d'image (IE) à chacun des individus qui apparaissent dans l'image capturée (CI) en appliquant l'image capturée (CI) au modèle d'analyse (21) ; et
le traçage individuel de chacun des individus sur la base de l'élément d'image (IE) qui est ajouté à chacun des individus.

12. Programme qui amène un ordinateur à exécuter :
la génération d'une image de simulation (SI) qui sert de données d'entrée (TID), par infographie ;
la génération d'informations d'étiquette indiquant une vérité-terrain pour l'image de simulation (SI), sur la base d'informations de paramètre qui sont utilisées pour une simulation de l'image de simulation (SI) ;
la génération de données de vérité-terrain (TOD) qui incluent l'image de simulation (SI) et les informations d'étiquette ;
la génération d'un modèle d'analyse (21), sur la base d'apprentissage machine dans lequel les données d'entrée (TID) et les données de vérité-terrain (TOD) sont utilisées en tant que données d'entraînement, dans lequel le modèle d'analyse (21) prend en entrée une image capturée (CI) et en sortie (des données avec des informations d'étiquette pour l'image capturée (CI) ajoutées à l'image capturée (CI) ;
l'extraction des informations d'étiquette pour l'image capturée (CI), depuis l'image capturée (CI), en utilisant le modèle d'analyse (21) ;
**caractérisé par** :
l'extraction d'informations de paramètre, sur la base des informations d'étiquette extraites depuis l'image capturée (CI) ;
la génération d'une nouvelle image de simulation (SI), sur la base des informations de paramètre extraites, sur la base des informations d'étiquette ;
la correction des informations de paramètre extraites, sur la base des informations d'étiquette, jusqu'à ce qu'une différence entre la nouvelle image de simulation (SI) et l'image capturée (CI) respecte une condition qui est définie d'avance, et
l'estimation d'informations sur la base des informations de paramètre qui ont été corrigées jusqu'à ce que la condition soit respectée.

13. Appareil de traitement d'informations, comprenant :
une unité de génération de données d'entrée (11) qui génère une image de simulation (SI) qui sert de données d'entrée (TID), par infographie ;
une unité de génération de données de vérité-terrain (12) qui génère des informations d'étiquette indiquant la vérité-terrain pour l'image de simulation (SI), sur la base des informations de paramètre qui sont utilisées pour la simulation de l'image de simulation (SI), et qui génère des données de vérité-terrain (TOD) qui incluent l'image de simulation (SI) et les informations d'étiquette ;
une unité d'analyse d'images (13) qui extrait des informations d'étiquette pour une image capturée (CI), depuis l'image capturée (CI), en utilisant un modèle d'analyse (21), et qui extrait des informations de paramètre sur la base des informations d'étiquette extraites depuis l'image capturée (CI), dans lequel le modèle d'analyse (21) est généré sur la base d'apprentissage machine dans lequel les données d'entrée (TID) et les données de vérité-terrain (TOD) sont utilisées en tant que données d'entraînement, et le modèle d'analyse (21) prend en entrée l'image capturée (CI) et en sortie des données avec des informations d'étiquette pour l'image capturée (CI) ajoutées à l'image capturée (CI) ;
**caractérisé par** :
une unité d'estimation (15) qui génère une nouvelle image de simulation (SI), sur la base des informations de paramètre extraites, sur la base des informations d'étiquette, corrige les informations de paramètre extraites, sur la base des informations d'étiquette, jusqu'à ce qu'une différence entre la nouvelle image de simulation (SI) et l'image capturée (CI) respecte une condition qui est définie d'avance, et estime des informations sur la base des informations de paramètre qui ont été corrigées jusqu'à ce que la condition soit respectée.
